# EUROPÄISCHE PATENTSCHRIFT

(11) **EP 3 193 678 B1**
(45) Veröffentlichungstag und Bekanntmachung des Hinweises auf die Patenterteilung: **11.10.2023**
(21) Anmeldenummer: 15760179.0
(22) Anmeldetag: 08.09.2015
(51) Int. Cl.: A47J 31/36

(54) **BRÜHEINHEIT ZUR SEQUENTIELLEN ZUBEREITUNG EINES GETRÄNKS SOWIE VORRICHTUNG UND VERFAHREN ZUM ZUBEREITEN EINES GETRÄNKS AUS WENIGSTENS ZWEI KAPSELN**
BREWING UNIT FOR SEQUENTIALLY PREPARING A BEVERAGE AND DEVICE AND METHOD FOR PREPARING A BEVERAGE FROM AT LEAST TWO CAPSULES
UNITÉ D'INFUSION POUR LA PRÉPARATION SÉQUENTIELLE D'UNE BOISSON AINSI QUE DISPOSITIF ET PROCÉDÉ DE PRÉPARATION D'UNE BOISSON À PARTIR D'AU MOINS DEUX CAPSULES

(30) Priorität: 15.09.2014 CH 13912014
(43) Veröffentlichungstag der Anmeldung: 26.07.2017
(73) Patentinhaber: Delica AG, 5033 Buchs AG (CH)
(72) Erfinder: BRÖNNIMANN, Markus, 3274 Hermrigen (CH); AFFOLTER, Roland, 5103 Möriken (CH)
(74) Vertreter: Hepp Wenger Ryffel AG
(86) Internationale Anmeldenummer: PCT/EP2015/070441
(87) Internationale Veröffentlichungsnummer: WO 2016/041810

(56) Entgegenhaltungen:
- EP-A2- 1 522 243
- EP-A2- 1 961 351
- WO-A1-2013/110650
- DE-A1-102004 016 194
- DE-T2- 60 302 666

## Beschreibung

Die vorliegende Erfindung betrifft eine Brüheinheit zur sequentiellen Zubereitung eines Getränks sowie eine Vorrichtung und ein Verfahren zum Zubereiten eines Getränks aus wenigstens zwei unterschiedlichen Kapseln. Aus dem Stand der Technik sind bereits Brüheinheiten und Kaffeemaschinen bekannt, welche aus der Vielzahl von am Markt erhältlichen Kaffeekapseln zur Zubereitung unterschiedlicher Kaffees auch unterschiedliche Kaffeekapseln gleichzeitig oder sequentiell in ein und dieselbe Tasse brühen können. Ebenso existieren auf dem Markt nicht nur Kapseln zur Zubereitung von Kaffee sondern auch solche zur Zubereitung von Tee, Süssgetränken, milchhaltigen Getränken oder auch Mischgetränken.

Beispielsweise beschreibt EP 1 961 351 B1 eine Brüheinheit eines Getränkezubereitungsgeräts, welche zwei unterschiedlich ausgestaltete Kaffeekapseln aufnehmen und verarbeiten kann. Diese Brüheinheit weist eine Heisswasserzuleitung auf, welche sich auf die beiden Kapselaufnahmekammern aufteilt und mittels individuell ansteuerbaren Magnetventilen mit den Kapselaufnahmekammern verbinden lässt. Somit ist es möglich, ein Getränk mit unterschiedlichen Inhaltsstoffen in einem sequentiellen Verfahren herzustellen. Es ist sogar möglich ein Getränk mit einem geschichteten Aufbau, beispielsweise Kaffee, Milch, Milchschaum, herzustellen. Nachteilig an einem solchen System sind die komplexe Ansteuerung der Magnetventile sowie die erhöhte Störungsanfälligkeit dieser Ventile.

Die EP 1 522 243 A2 beschreibt eine Brühvorrichtung für die Zubereitung eines Getränks mit einem entfernbaren Träger für die Aufnahme einer Portionspackung. Der Träger verfügt über zwei spiegelbildlich angeordnete Aufnahmekavitäten mit unterschiedlicher Dimension zur Aufnahme unterschiedlicher Portionspackungen. Durch Wenden des Trägers kann jeweils die der zu brühenden Portionspackung entsprechende Kavität bestimmt werden.

Die WO 2013/110650 A1 beschreibt eine Kapsel-Getränkemaschine mit einem universellen Getränkekapsel-Magazin. Dieses Kapselmagazin ist zur Aufnahme von zumindest zwei Kapseln ausgeführt. Ausserdem sind Magazinbewegungsmittel zur nacheinander folgenden Positionierung der zumindest zwei Kapseln im Brühraum der Brühvorrichtung vorgesehen. Zu diesem Zweck weist die Brühvorrichtung einen Brühraum auf, der vom Magazinkörper mittels der Vorschubbewegung gequert wird.

Die DE 10 2004 016194 A1 offenbart eine Brüheinheit zur sequentiellen Zubereitung eines Getränkes aus wenigstens zwei Kapseln umfassend wenigstens eine erste und eine zweite Kapselaufnahme in einem Karusselmagazin und eine Wasserzuführung mit einer einzigen Wasserabgabeeinheit zum Zuführen von Wasser zu je einer Kapselaufnahme, wobei die Kapselaufnahmen und die Wasserabgabeeinheit derart relativ zueinander bewegbar sind, dass die Wasserabgabeeinheit in einer ersten Position mit der ersten Kapselaufnahme und in einer zweiten Position mit der zweiten Kapselaufnahme in Wirkverbindung bringbar ist oder in Wirkverbindung steht, wobei die Wasserabgabeeinheit selbst einen Injektor (Kanüle) zum Aufstechen der Kapsel aufweist, wobei die Wasserabgabeeinheit mit ihrem Injektor über eine Bewegungsvorrichtung verfügt, welche das Aufstechen und Eindringen des Injektors in die Kapsel erlaubt, und wobei der Injektor in einem Brühkopf angeordnet ist, welcher dichtend auf die Kapselaufnahme pressbar ist.

Es ist Aufgabe der Erfindung die Nachteile des Standes der Technik zu überwinden. Insbesondere soll eine einfache Brüheinheit zum sequentiellen Zubereiten eines Getränks aus wenigstens zwei Kapseln sowie eine Vorrichtung und ein Verfahren zum Zubereiten eines Getränks aus wenigstens zwei Kapseln zur Verfügung gestellt werden, welche kostengünstig herzustellen und zuverlässig zu betreiben sind.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Eine erfindungsgemässe Brüheinheit zur sequentiellen Zubereitung eines Getränkes aus wenigstens zwei Kapseln umfasst wenigstens eine erste und eine zweite Kapselaufnahme und eine Wasserzuführung mit einer einzigen Wasserabgabeeinheit zum Zuführen von Wasser zu je einer Kapselaufnahme. Dabei sind die Kapselaufnahme und die Wasserabgabeeinheit derart relativ zueinander bewegbar, dass die Wasserabgabeeinheit in einer ersten Position mit der ersten Kapselaufnahme und in einer zweiten Position mit der zweiten Kapselaufnahme in Wirkverbindung bringbar ist oder in Wirkverbindung steht.

Hier und im Folgenden wird unter Brühen nicht nur verstanden, dass mittels heissen Wassers beispielsweise Kaffee aus einem Kaffeepulver oder Tee aus Teekräutern ausgelöst wird, sondern insbesondere auch das Auflösen oder Lösen eines Inhaltsstoffes in Wasser. Ebenso wird unter Brühen auch das Auflösen in kaltem Wasser verstanden.

Unter einer einzigen Wasserabgabeeinheit wird verstanden, dass lediglich eine Einheit zur Abgabe von Wasser existiert, welche entweder mit der ersten Kapselaufnahme in Wirkverbindung bringbar oder in Wirkverbindung steht oder aber mit der zweiten Kapselaufnahme. Explizit ausgeschlossen werden hier Lösungen mit einer Wasserabgabeeinheit für beide Kapselaufnahmen, welche mittels Ventilen eine Umschaltung von der ersten zur zweiten Kapselaufnahme ermöglichen. Ebenfalls ausgeschlossen wird eine gleichzeitige Abgabe von Wasser an beide Kapselaufnahmen.

Durch eine relative Bewegbarkeit der Kapselaufnahme zur Wasserabgabeeinheit wird ermöglicht, dass lediglich eine einzige Wasserabgabeeinheit verwendet werden muss, welche jedoch sequentiell mit der ersten Kapselaufnahme und der zweiten Kapselaufnahme in Wirkverbindung gebracht werden kann. Dadurch, dass nur eine einzige Wasserabgabeeinheit verwendet wird, kann die ganze Brüheinheit einfacher ausgestaltet werden, insbesondere kann auf Ventile verzichtet werden. Die Brüheinheit wird durch die fehlenden Ventile nicht nur einfacher sondern auch zuverlässiger bezüglich einer Leckage. Es versteht sich von selbst, dass unter einer Bewegbarkeit nicht nur die Bewegung eines Injektors beim Einstechen in eine Kapsel verstanden wird sondern vielmehr ein räumliches Ausrichten von Wasserabgabeeinheit und Kapselaufnahme.

Die wenigstens zwei Kapselaufnahmen sind zur Aufnahme von unterschiedlichen Kapseln ausgestaltet. Dabei wird unter unterschiedlichen Kapseln verstanden, dass die Kapseln unterschiedlich mechanisch ausgestaltet und unterschiedlich gross sind. So ist es beispielsweise denkbar, dass eine klassische Espresso-Kapsel in der ersten Kapselaufnahme aufgenommen werden kann, während die zweite Kapselaufnahme beispielsweise eine Kapsel aufnehmen kann, welche neben Kaffee auch Milchpulver beinhaltet. Insbesondere für Kapseln, welche Milch oder Milchpulver enthalten, werden Lösungen bevorzugt bei welchen der Auslauf des zubereiteten Getränks direkt von der Kapsel gebildet wird, sodass das zubereitete Getränk nicht mit der Brüheinheit oder der Kapselaufnahme in Berührung kommt. Eine solche Ausgestaltung hat Vorteile im Hinblick auf eine einfache Reinigung und Hygiene.

Die Kapselaufnahmen können von der ersten Position in die zweite Position verschiebbar in der Brüheinheit gelagert sein. Beispielsweise können die beiden Kapselaufnahmen in einem Schlitten angeordnet sein, welcher ein einfaches Verschieben von der ersten in die zweite Position ermöglicht. Ebenso denkbar wäre jedoch auch eine Lösung, wo die Wasserabgabeeinheit von einer ersten Position in eine zweite Position verschiebbar ist, wobei die Kapselaufnahmen sich nicht bewegen. Selbstverständlich können auch die Kapselaufnahmen und die Wasserabgabeeinheit beweglich angeordnet sein.

Die Kapselaufnahmen können von der ersten Position in die zweite Position schwenkbar oder drehbar in der Brüheinheit gelagert sein. Der Vorteil einer Schwenk- oder Drehbewegung ist, dass eine Schwenk- oder Drehbewegung eine einfache Ausgestaltung der Brüheinheit erlaubt. Insbesondere wird durch die Schwenk- oder Drehbewegung kein zusätzlicher Raumbedarf benötigt, wenn beispielsweise die Schwenk- oder Drehbewegung um eine Achse erfolgt, welche innerhalb oder zwischen den beiden Kapselaufnahmen angeordnet ist. Dabei wird unter drehbar gelagert verstanden, dass die Kapselaufnahmen um 360° drehbar sind, während unter schwenkbar eine Drehbewegung um einen begrenzten Winkel verstanden wird.

Dabei können die Kapselaufnahmen um eine horizontale oder um eine vertikale Drehachse von der ersten Position in die zweite Position schwenkbar oder drehbar sein. Je nach räumlichen Verhältnissen in der Brüheinheit oder in der entsprechenden Maschine, hat die horizontale oder die vertikale Drehachse Vorteile. Es sind jedoch auch Lösungen denkbar, welche eine geneigte Drehachse vorsehen.

Die Kapselaufnahmen können von der ersten Position aus der Brüheinheit entfernbar und in die zweite Position in der Brüheinheit einsetzbar sein. Eine solche Anordnung erlaubt eine besonders einfache Konstruktion der Brüheinheit, da zum Wechseln von der ersten Kapsel zur zweiten Kapsel lediglich die erst Kapselaufnahme aus der Brüheinheit entfernt werden muss um anschliessend die zweite Kapselaufnahme in die Brüheinheit wieder einzuführen. Insbesondere wenn beispielsweise die beiden Kapselaufnahmen in einem gemeinsamen Einschub angeordnet sind, kann durch ein Herausnehmen, Drehen und Wiedereinführen des Einschubs der Wechsel von der ersten Kapsel zur zweiten Kapsel erfolgen.

Jede Kapselaufnahme kann in einem Einschub angeordnet sein. Insbesondere können die Kapselaufnahmen aber auch gemeinsam in einem Einschub oder wie vorgängig erwähnt in einem Schlitten angeordnet sein. Durch die gemeinsame Anordnung der Kapselaufnahmen in einem Einschub wird gewährleistet, dass beide Kapselaufnahmen immer gleichzeitig bewegt werden. Der Benutzer kann somit durch eine einzige Bewegung ein Umstellen von einer ersten Kapsel zu einer zweiten Kapsel realisieren. Einzelne Einschübe mit je einer Kapselaufnahme erleichtern die Modularität und ermöglichen durch individuell ausgestaltete Einschübe mit entsprechenden Kapselaufnahmen, dass eine Vielzahl von unterschiedlich ausgestalteten Kapseln verwendet werden können. Insbesondere wird somit ermöglicht, Kapseln unterschiedlicher Kapsel-Systeme von unterschiedlichen Systemherstellern zu verwenden. Auch bei gemeinsam in einem Einschub angeordneten Kapselaufnahmen kann eine gewisse Modularität gewährleistet werden. Die Flexibilität ist jedoch kleiner bzw. mit höheren Kosten verbunden.

Die Relativbewegung zwischen den Kapselaufnahmen und der Wasserabgabeeinheit kann manuell oder automatisch erfolgen. Somit kann je nach Ausführung eine komfortablere oder eine einfachere Lösung für den Benutzer zur Verfügung gestellt werden.

Jeder Kapselaufnahme kann ein eigener Injektor zum Aufstechen und Einspritzen von Wasser in eine in der Kapselaufnahme angeordneten Kapsel zugeordnet sein. Dabei weist jeder Injektor einen Wasseranschluss zum Anschliessen an die Wasserabgabeeinheit auf. Entsprechend muss nach einer Relativbewegung zwischen Kapselaufnahme und Wasserabgabeeinheit, bzw. zwischen Injektor und Wasserabgabeeinheit gewährleistet werden, dass der Wasseranschluss des Injektors dicht an die Wasserabgabeeinheit angeschlossen wird, um eine leckagefreie Zubereitung eines Getränkes zu ermöglichen. Dadurch, dass jede Kapselaufnahme über einen eigenen Injektor verfügt, wird insbesondere eine Verschmutzung oder Kontamination der zweiten Kapselaufnahme mit dem Zubereitungsgut der ersten Kapselaufnahme verhindert. Dies ist beispielsweise dann wichtig, wenn in einem der beiden Kapselaufnahmen milchhaltige Kapseln verarbeitet werden.

Es ist jedoch ebenso denkbar, dass die Wasserabgabeeinheit selbst einen Injektor zum Aufstechen der Kapsel aufweist. Entsprechend muss die Wasserabgabeeinheit mit ihrem Injektor über eine Bewegungsvorrichtung verfügen, welche das Aufstechen und Eindringen des Injektors in die Kapsel erlaubt.

Der Injektor ist in einem Brühkopf angeordnet und kann mehrere Aufstechspitzen, zum Aufstechen beispielsweise einer Deckelfolie einer Kapsel, aufweisen. Der Brühkopf verfügt dabei zusätzlich über Dichtungen, welche ein dichtes Abschliessen der Kapsel-aufnahmen erlauben, so dass ein leckagefreies Einspritzen von Wasser in die Kapsel ermöglicht wird. Die Anordnung des Injektors im Brühkopf erleichtert insbesondere die für das Aufstechen der Kapsel benötigte Bewegung.

Ein weiterer Aspekt der vorliegenden Erfindung ist eine Vorrichtung zum Zubereiten eines Getränks aus wenigstens zwei Kapseln, wobei die Vorrichtung eine Brüheinheit wie vorgängig beschrieben, eine Wasserleitung und eine Wasserpumpe umfasst. Dabei ist die Wasserabgabeeinheit der Brüheinheit über die Wasserleitung mit der Wasserpumpe verbindbar oder verbunden. Dadurch, dass die Wasserabgabeeinheit der Brüheinheit über die Wasserleitung mit der Wasserpumpe verbindbar oder verbunden ist, kann sichergestellt werden, dass Wasser unter einem bestimmten Druck und einer bestimmten Menge in die Kapsel eingespritzt werden kann. Es ist ausserdem denkbar, dass der Druck und/oder die Menge je nach verwendeter Kapsel unterschiedlich eingestellt werden.

Die Vorrichtung kann weiter einen Wassererhitzer umfassen, welcher nicht nur Wasser, sondern Wasser mit einer bestimmten Temperatur zur Verfügung stellen kann. Es ist ebenfalls denkbar, dass das Wasser je nach verwendeter Kapsel eine unterschiedliche Temperatur oder einen unterschiedlichen Temperaturverlauf aufweist und der Wassererhitzer eine entsprechende Einstellmöglichkeit aufweist.

Der Wassererhitzer kann in Fliessrichtung des Wassers vor oder nach der Wasserpumpe angeordnet sein. Insbesondere die Anordnung des Wassererhitzers nach der Pumpe hat den Vorteil, dass in der Wasserpumpe weniger Kalkablagerungen auftreten und die Problematik der Kavitation nicht auftritt.

Ein weiterer Aspekt der vorliegenden Erfindung betrifft ein Verfahren zum Zubereiten eines Getränks mit wenigstens einer ersten und einer zweiten Kapsel mit einer Vorrichtung wie vorgängig beschrieben. Dabei umfasst das Verfahren die Schritte:
- Einlegen einer ersten Kapsel in die erste Kapselaufnahme und einer zweiten Kapsel in die zweite Kapselaufnahme der Brüheinheit der Vorrichtung,
- Ausrichten der ersten Kapselaufnahme mit der Wasserabgabeeinheit,
- Verbinden der Wasserabgabeeinheit mit der ersten Kapselaufnahme,
- Durchleiten von Wasser durch die erste Kapsel,
- Ausrichten der zweiten Kapselaufnahme mit der Wasserabgabeeinheit,
- Verbinden mit der Wasserabgabeeinheit mit der zweiten Kapselaufnahme,
- Durchleiten von Wasser durch die zweite Kapsel.

Wie bereits vorgängig erwähnt, wird durch die Verwendung von lediglich einer Wasserzuführung eine wesentlich einfachere Konstruktion der Vorrichtung ermöglicht. Entsprechend wird auch deren Betrieb einfacher und ist insbesondere wenig anfällig auf Störungen.

Das Ausrichten der Kapselaufnahme mit der Wasserabgabeeinheit kann mittels einer Verschiebung der Kapselaufnahme erfolgen. Ebenso ist es jedoch denkbar, dass anstelle der Kapselaufnahme die Wasserabgabeeinheit oder gar beide verschoben werden. Es ist jedoch auch denkbar, dass die Ausrichtung der Kapselaufnahme mit der Wasserabgabeeinheit mittels einer Schwenk- oder Drehbewegung der Kapselaufnahme erfolgt. Eine solche Schwenk- oder Drehbewegung kann beispielsweise um eine horizontale Achse oder um eine vertikale oder gar um eine geneigte Achse erfolgen. Beispielsweise kann die Schwenk- oder Drehbewegung oder auch die Verschiebung der Kapselaufnahme durch entsprechende Anschläge begrenzt werden. Somit wird ein Ausrichten entsprechend vereinfacht.

Das Ausrichten der Kapselaufnahme mit der Wasserabgabeeinheit kann mittels Entfernen der Kapselaufnahme aus der Vorrichtung, Drehen der Kapselaufnahme und Wiedereinsetzen der Kapselaufnahme in die Vorrichtung erfolgen. Durch diesen Verfahrensschritt wird eine sehr einfache Konstruktion der Vorrichtung ermöglicht.

Anhand von Figuren, welche lediglich Ausführungsbeispiele darstellen, wird die Erfindung im Folgenden näher erläutert. Es zeigen:
- Figur 1:: eine erfindungsgemässe Brüheinheit mit entferntem Einschub in einer perspektivischen Ansicht,
- Figur 2:: eine Seitenansicht der Brüheinheit aus Figur 1,
- Figur 3:: eine Seitenansicht der Brüheinheit aus Figur 2, wobei der Einschub eingesetzt ist,
- Figur 4:: eine Seitenansicht der Brüheinheit aus Figur 3, wobei der Einschub eingesetzt und die Brüheinheit geschlossen ist,
- Figur 5:: eine perspektivische Ansicht einer alternativen Ausführungsform eines Einschubes,
- Figur 6:: eine perspektivische Ansicht einer Ausführungsform einer Wasserabgabeeinheit,
- Figur 7:: eine Seitenansicht einer anderen Ausführungsform einer erfindungsgemässen Brüheinheit mit einem Einschub in einer ersten Position,
- Figur 8:: die Brüheinheit aus Figur 7, wobei die Brüheinheit geschlossen ist,
- Figur 9:: die Brüheinheit aus Figur 7 mit dem Einschub in der zweiten Position,
- Figur 10:: die Brüheinheit aus Figur 9, wobei die Brüheinheit geschlossen ist,
- Figur 11a:: eine Seitenansicht einer weiteren Ausführungsform einer erfindungsgemässen Brüheinheit mit einem Einschub in einer ersten Position,
- Figur 11b:: die Brüheinheit aus Figur 11a, wobei die Brüheinheit geschlossen ist,
- Figur 11c:: die Brüheinheit aus Figur 11a mit dem Einschub in der zweiten Position,
- Figur 11d:: die Brüheinheit aus Figur 11c, wobei die Brüheinheit geschlossen ist,
- Figur 12a:: eine Seitenansicht einer weiteren Ausführungsform einer erfindungsgemässen Brüheinheit, wobei der Brühkopf verschiebbar gelagert ist,
- Figur 12b:: die Brüheinheit aus Figur 12a, wobei sich der Brühkopf in einer ersten Position befindet,
- Figur 12c:: die Brüheinheit aus Figur 12a, wobei sich der Brühkopf in einer zweiten Position befindet,
- Figur 13:: eine schematische Darstellung des Einschubs und der bewegbaren Wasserabgabeeinheit in verschiedenen Positionen,
- Figur 14:: eine schematische Darstellung eines Einschubs und einer bewegbaren Wasserabgabeeinheit im Querschnitt, und
- Figur 15:: eine erfindungsgemässe Vorrichtung zum Zubereiten eines Getränks in einer perspektivischen Ansicht.

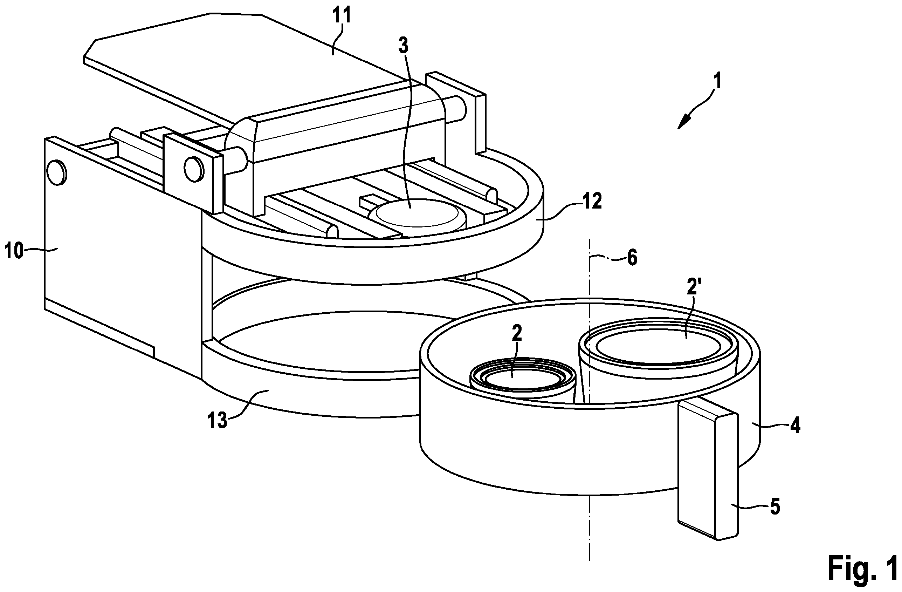

Figur 1 zeigt eine erfindungsgemässe Brüheinheit 1 in einer perspektivischen Ansicht, wobei ein Einschub 4 entfernt ist. Der Einschub 4 ist im Wesentlichen als Rundscheibe ausgestaltet und weist in seinem Inneren zwei Kapselaufnahmen 2, 2' auf, in welchen Kapseln für die Zubereitung eines Getränks eingelegt werden können. Deutlich zu erkennen ist, dass die beiden Kapselaufnahmen 2, 2' unterschiedlich gross ausgestaltet sind, sodass Kapseln von unterschiedlicher Bauart aufgenommen werden können. Im dargestellten Ausführungsbeispiel nimmt die kleinere Kapselaufnahme 2 eine klassische Espresso-Kapsel auf, während die grössere Kapselaufnahme 2' eine Kapsel mit Milchinhaltstoffen aufnimmt. Die Kapselaufnahmen 2, 2' können dabei derart ausgestaltet sein, dass sie herkömmliche, auf dem Markt erhältliche Kapseln aufnehmen, oder aber für einen spezifischen Kapseltyp vorgesehen sind. Der Einschub 4 weist an seinem äusseren Umfang einen Griff 5 auf, welcher zum Festhalten bzw. Betätigen des Einschubs 4 dient. Die Brüheinheit 1 umfasst neben dem Einschub 4 auch einen Aufnahmekopf 10, in welchem der Einschub 4 eingeschoben werden kann. Hierzu ist im Aufnahmekopf 10 eine Öffnung vorgesehen, welche durch eine obere und eine untere Einschubhalterung 12, 13 begrenzt wird. Der Aufnahmekopf 10 weist weiter einen Verschlusshebel 11 auf, welcher einerseits ein Verriegeln der Brüheinheit 1 bewirkt, und andererseits den Einschub 4 im Aufnahmekopf 10 fixiert. Ausserdem verfügt die Brüheinheit 1 über eine Wasserabgabeeinheit 3, welche je nach Ausrichtung des Einschubs 4 im Aufnahmekopf 10 der einen oder der anderen Kapselaufnahme 2, 2' Wasser zuführt. Ebenfalls dargestellt ist eine Drehachse 6, welche lediglich aufzeigen soll, wie der Einschub 4 schwenkbar oder drehbar ist. Diese Drehachse 6 ist dabei vertikal ausgerichtet.

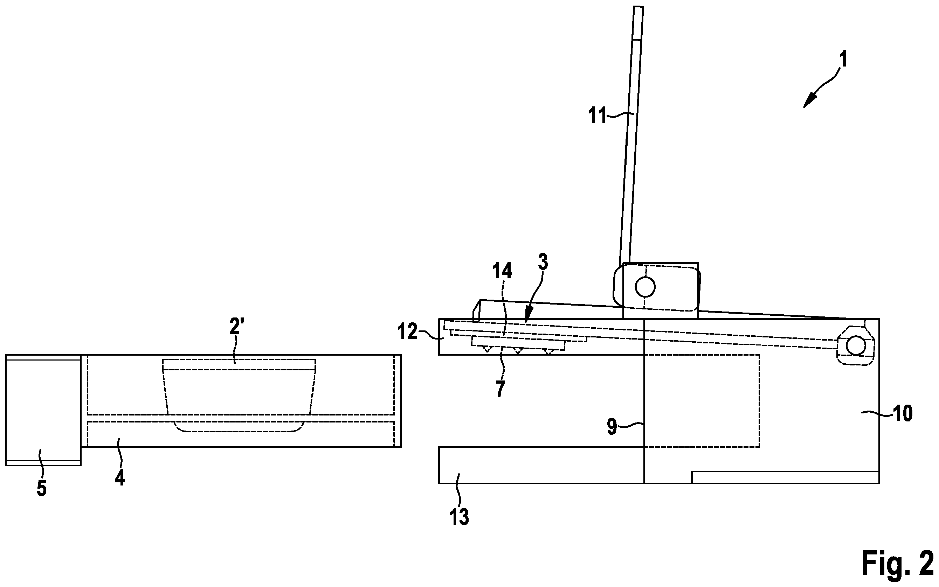

Die Figur 2 zeigt eine Seitenansicht der Brüheinheit 1 aus der Figur 1. Der Einschub 4 mit seinem Griff 5 und den beiden Kapselaufnahmen 2, 2' (siehe auch Figur 1) ist wiederum ausserhalb des Aufnahmekopfs 10 dargestellt, so dass die obere und untere Einschubhalterung 12, 13 deutlich zu erkennen sind. Der Aufnahmekopf 10 weist zwei Anschlagpositionen auf, wobei jedoch nur die eine Anschlagposition 9 sichtbar ist. An diesen Anschlagpositionen 9 schlägt der Griff 5 des Einschubs 4 an, wenn der Einschub in der Brüheinheit 1 eingesetzt ist und in die erste oder die zweit Position gedreht wird, um die eine oder andere Kapselaufnahme 2, 2' mit der Wasserabgabeeinheit 3 in Wirkverbindung zu bringen. Die Wasserabgabeeinheit 3 weist einen Injektor 7 auf, welcher in einem Brühkopf 14 angeordnet ist. Der Injektor 7 dient dabei dem Aufstechen einer Kapsel, welche in der Kapselaufnahme 2, 2' positioniert wurde. Dadurch, dass der Verschlusshebel 11 nach oben von der Brüheinheit 1 absteht, befinden sich die Wasserabgabeeinheit 3, der Brühkopf 14 und der Injektor 7 in ihrer offenen Stellung, so dass der Einschub problemlos eingeschoben werden kann.

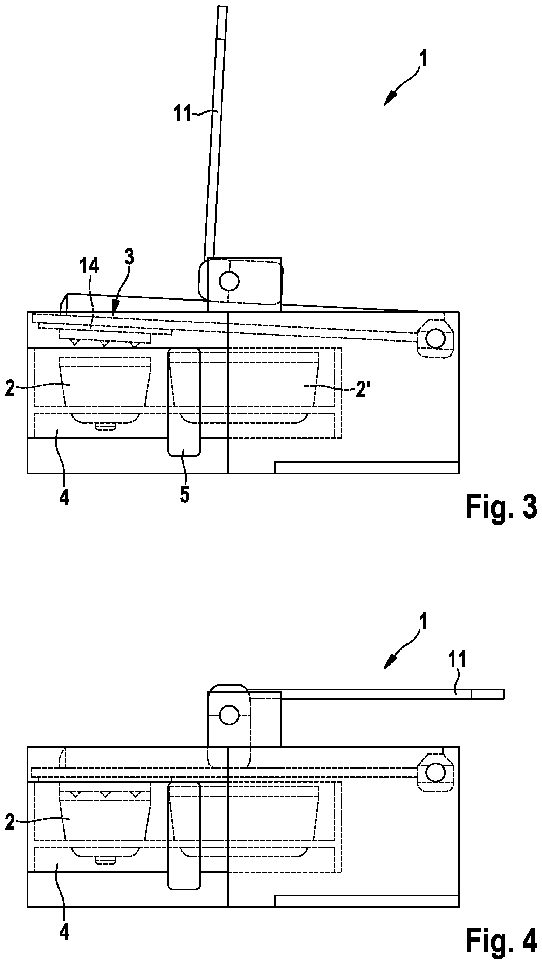

Die Figur 3 zeigt eine Seitenansicht der Brüheinheit 1 aus der Figur 2, wobei der Einschub 4 eingesetzt ist. Der Einschub 4 wurde mit seinem Griff 5 bereits in die erste Position gebracht, so dass der Griff 5 an der Anschlagposition 9 (siehe Figur 2) anschlägt. Die erste Kapselaufnahme 2 ist mit der Wasserabgabeeinheit 3 und dem Brühkopf 14 ausgerichtet, während die zweite Kapselaufnahmen 2' von der Wasserabgabeeinheit 3 wegedreht ist.

In der Figur 4 ist eine Seitenansicht der Brüheinheit 1 aus der Figur 3 dargestellt, wobei der Einschub 4 eingesetzt und die Brüheinheit 1 geschlossen ist. Der Verschlusshebel 11 wurde nach unten, in der Darstellung in die horizontale Lage, verschwenkt. Durch diese Bewegung hat sich der Brühkopf 14 (siehe Figuren 2 oder 3) auf die Kapselaufnahme 2 abgesenkt und dichtet die Wasserabgabeeinheit 3 (siehe Figuren 2 oder 3) mit der Kapselaufnahme 2 ab. Der Injektor 7 (siehe Figur 2) durchsticht bei dieser Absenkbewegung eine in der Kapselaufnahme 2 angeordnete Kapsel, so dass anschliessen Wasser durch die Wasserabgabeeinheit 3 in die Kapsel eingespritzt werden kann.

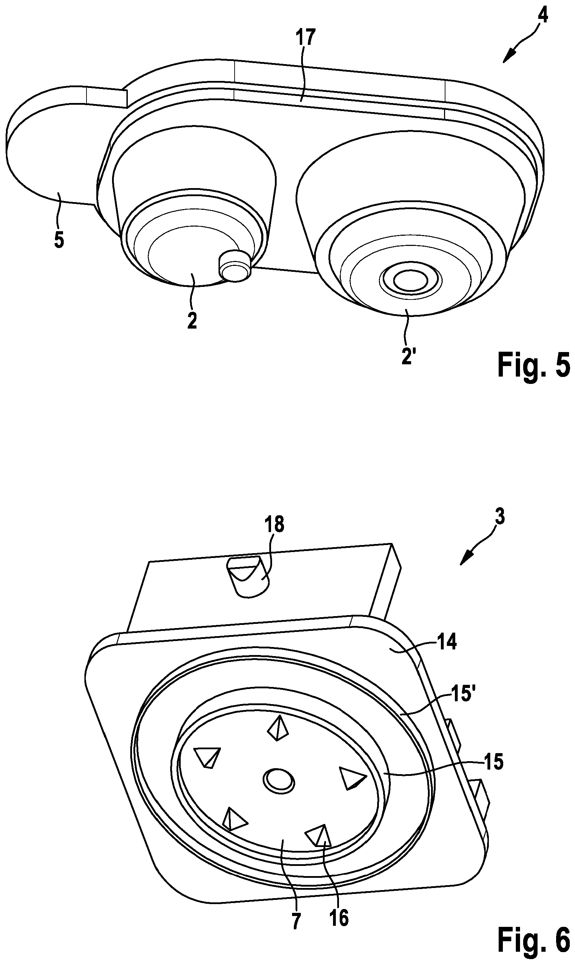

In der Figur 5 dargestellt ist eine perspektivische Ansicht einer Ausführungsform eines Einschubes 4. Der Einschub 4 weist einen seitlichen Griff 5 auf, an dem ein Benutzer den Einschub 4 festhalten und in einen Aufnahmekopf 10 (siehe Figuren 1 oder 2) einer Brüheinheit 1 einschieben kann. Zur präzisen Führung des Einschubes 4 im Aufnahmekopf weist der Einschub 4 seitliche Führungsschienen 17 auf, welche in korrespondierend ausgestaltete Führungsnuten des Aufnahmekopfs eingreifen können. Ausserdem weist der Einschub 4 zwei Kapselaufnahmen 2, 2' auf, welche zwei unterschiedlich grosse Kapseln aufnehmen können. Die kleinere Kapselaufnahme 2 weist eine Auslauföffnung auf, welche derart dimensioniert ist, dass sich ein gleichmässiger Getränkestrahl ausbilden wird. Im Gegensatz hierzu weist die grössere Kapselaufnahme 2' eine grössere Öffnung auf, durch welche ein Auslass einer Kapsel passt, so dass das zubereitete Getränk nicht mit der Kapselaufnahme 2' in Berührung kommt. Dies ist insbesondere bei milchhaltigen Getränken von Vorteil.

Die Figur 6 zeigt eine Ausführungsform einer Wasserabgabeeinheit 3, welche in ähnlicher Form in den Brüheinheiten 1 der Figuren 1 bis 4 eingesetzt ist. Die Wasserabgabeeinheit 3 weist einen Brühkopf 14 auf, welcher bei geschlossener Brüheinheit die Kapselaufnahme 2, 2' (siehe Figuren 1 bis 5) abdichtet. Hierzu ist der Brühkopf 14 mit zwei Dichtungen 15, 15' versehen. Diese Dichtungen 15, 15' sind derart ausgestaltet und angeordnet, dass diese auf den Flansch einer in die Kapselaufnahmen eingesetzten Kapsel oder direkt auf die Kapselaufnahme dichtet. Durch die Anordnung von zwei Dichtungen 15, 15', welche durch unterschiedlich grosse Lippendichtungen gebildet werden, kann sicherge-stellt werden, dass der Brühkopf 14 sowohl eine grosse Kapselaufnahme als auch eine kleine Kapselaufnahme abdichten kann. Um Wasser in die üblicherweise fest verschlossenen Kapseln einspritzen zu können, weist der Brühkopf 14 weiter einen Injektor 7 auf, welcher mit fünf Einstechspitzen 16 versehen ist. Diese Einstechspitzen 16 stechen beim Aufdrücken der Brüheinheit 14 mit Injektor 7 auf eine in einer Kapselaufnahme positionierte Kapsel und durchstechen deren Wand. Das Wasser kann nun durch den Injektor 7 auf die durchstochene Wand aufgespritzt werden und durch die Einstechöffnungen in die Kapsel eindringen oder aber durch eine Öffnung in den Einstechspitzen 16 direkt in das Kapselinnere eingespritzt werden. Die Wasserabgabeeinheit 3 weist in der dargestellten Ausführungsform seitlich einen Führungsstift 18 auf, welcher das Positionieren der Wasserabgabeeinheit 3 erleichtert.

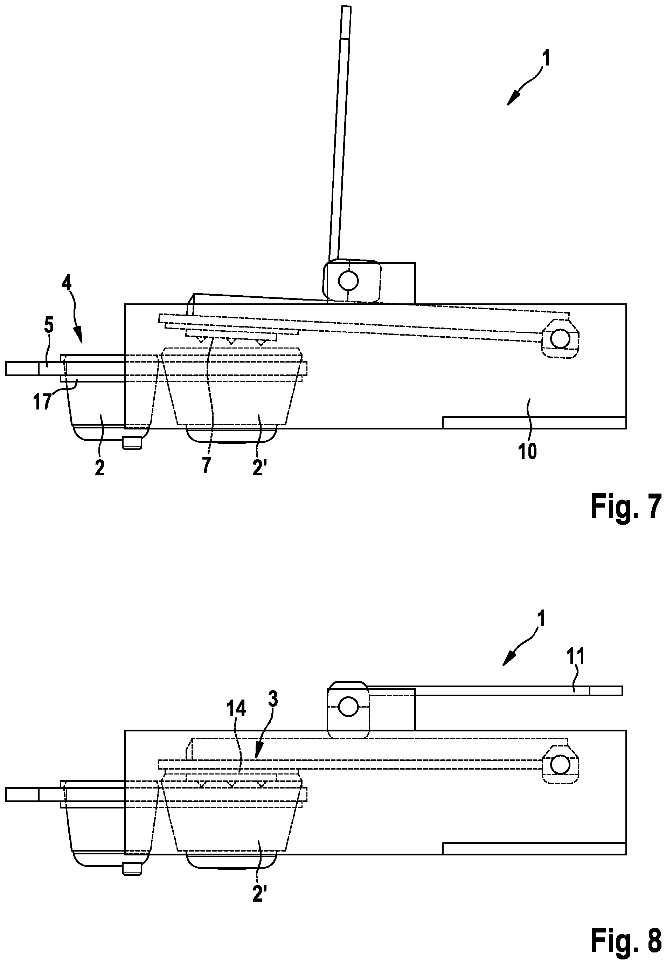

Die Figur 7 zeigt eine Seitenansicht einer anderen Ausführungsform einer erfindungsgemässen Brüheinheit 1 mit einem Einschub 4 in einer ersten Position. Im Unterschied zu der Brüheinheit mit schwenkbarem Einschub gemäss den Figuren 1 bis 4 handelt es sich hierbei um eine Brüheinheit 1 mit verschiebbarem Einschub 4. Abgesehen von diesem Unterschied ist die Funktion jedoch identisch, so dass nur noch die für die Verschiebung unterschiedlichen Merkmale genauer beschrieben werden. Der Einschub 4 ist dabei identisch zum Einschub aus der Figur 5 und weist einen Griff 5, zwei Kapselaufnahmen 2, 2' und eine Einschubschiene 17 auf, welche in eine korrespondierende Nut (nicht dargestellt) des Aufnahmekopfes 10 der Brüheinheit 1 passt.

In der Figur 8 ist die Brüheinheit 1 der Figur 7 dargestellt, wobei die Brüheinheit 1 geschlossen ist. Entsprechend ist der Verschlusshebel 11 in der horizontalen Lage dargestellt. Die Wasserabgabeeinheit 3 mit Brühkopf 14 verschliesst die Kapselaufnahme 2' des Einschubes 4, so dass Wasser eingespritzt werden kann.

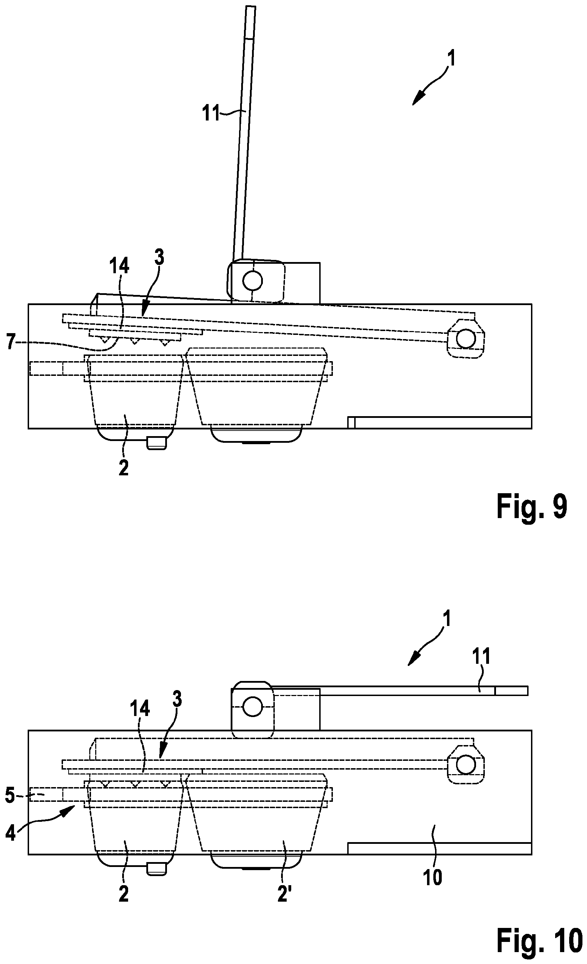

In der Figur 9 ist wiederum die Brüheinheit der Figur 7 dargestellt, wobei sich der Einschub 4 in der zweiten Position befindet. Entsprechend ist die Wasserabgabeeinheit 3 mit der Kapselaufnahme 2 ausgerichtet. Die Brüheinheit 1 ist offen, der Verschlusshebel 11 zeigt nach oben und die Wasserabgabeeinheit 3 und der Brühkopf 14 mit Injektor 7 sind abgehoben.

Die Figur 10 zeigt die Brüheinheit 1 aus Figur 9, wobei diese jedoch geschlossen ist. Der Verschlusshebel 11 ist wieder in horizontaler Richtung dargestellt, die Wasserabgabeeinheit 3 und der Brühkopf 14 werden auf die Kapselaufnahme 2 gedrückt.

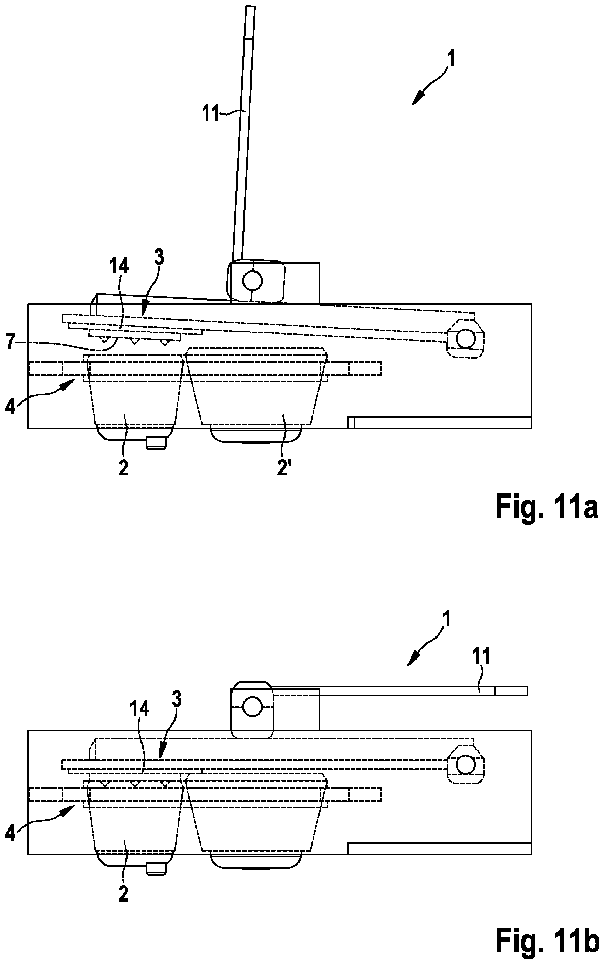

In den Figuren 11a bis 11d ist eine weitere Ausführungsform einer erfindungsgemässen Brüheinheit 1 dargestellt. Dabei sind die Bezugszeichen identisch zu den Bezugszeichen der Figuren 7. bis 10 gewählt. Bei dieser Ausführungsform der Brüheinheit 1 ist die Brüheinheit 1 und der Einschub 4 derart ausgestaltet, dass der Einschub 4 beim Wechsel von der ersten zur zweiten Kapselaufnahmevorrichtung 2, 2' jeweils aus der Brüheinheit 1 entfernt und in umgekehrter Richtung wieder eingeschoben werden muss.

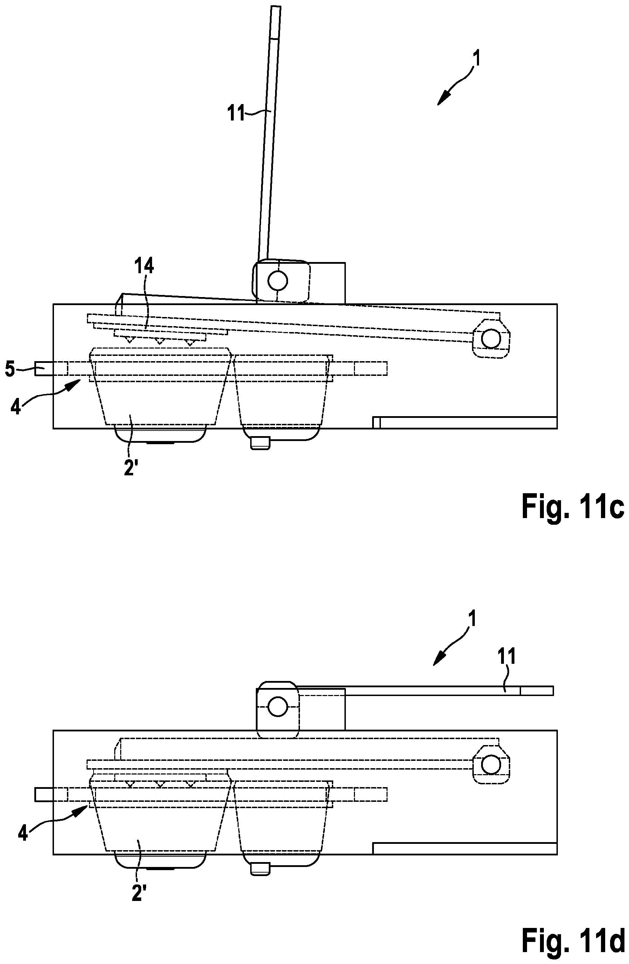

Entsprechend zeigt die Figur 11a die Brüheinheit 1 beim Einsetzen des Einschubes 4 in der ersten Position, d.h. die Wasserabgabeeinheit 3 ist mit der ersten Kapselaufnahme 2 ausgerichtet. In der Figur 11b ist die Brüheinheit 1 geschlossen, der Verschlusshebel 11 ist nach unten geklappt. In der Figur 11c ist der Wechsel des Einschubes 4 von der ersten Position in die zweite Position bereits erfolgt, der Brühkopf 14 ist bereits mit der zweiten Kapselaufnahmen 2' ausgerichtet. Die Figur 11d zeigt wiederum die geschlossenen Brüheinheit 1, so dass das Getränk aus der in der zweiten Kapselaufnahme 2' aufgenommenen Kapsel zubereitet werden kann.

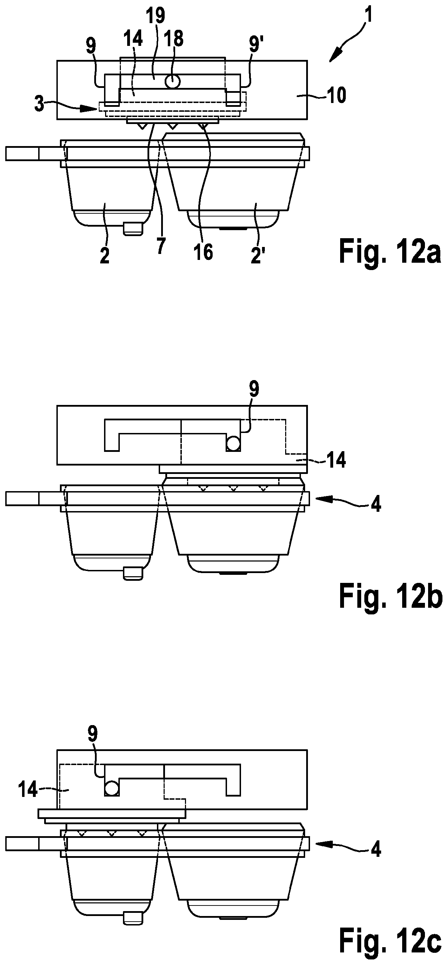

In den Figuren 12a bis 12c wird in einer Seitenansicht eine weitere Ausführungsform einer erfindungsgemässen Brüheinheit 1 gezeigt, wobei die Wasserabgabeeinheit 3 mit dem Brühkopf 14 verschiebbar gelagert ist. Die Brüheinheit 1 weist wiederum einen Aufnahmekopf 10 auf, welcher einen Einschub 4, ähnlich oder identisch zum Einschub 4 aus den Figuren 5, 7 bis 10, aufnimmt. Der Brühkopf 14, welcher im Wesentlichen dem Brühkopf aus der Figur 6 entspricht, ist mit einem Führungsstift 18 versehen, welcher seitlich in einen Führungsschlitz 19 des Aufnahmekopfes 10 greift und darin verschiebbar gelagert ist. Der Führungsschlitz 19 erlaubt eine horizontale Verschiebung, welche auf beiden Seiten je durch eine Anschlagposition 9, 9' begrenzt wird. Diese Anschlagpositionen 9, 9' sind dabei derart ausgerichtet, dass sich der Brühkopf 14 in diesen Anschlagpositionen 9 direkt über einer der beiden Kapselaufnahmen 2, 2' des Einschubes 4 befindet. In diesen Anschlagpositionen 9, 9' ist der Führungsschlitz zusätzlich nach unten abgewinkelt, so dass eine Verschiebung oder ein Aufpressen des Brühkopfes 14 auf die Kapselaufnahmen 2, 2' ermöglicht wird. Somit kann der Injektor 7 mit seinen Aufstechspitzen 16 die in den Kapselaufnahmen 2, 2' angeordneten Kapseln durchstechen und Wasser einspritzen.

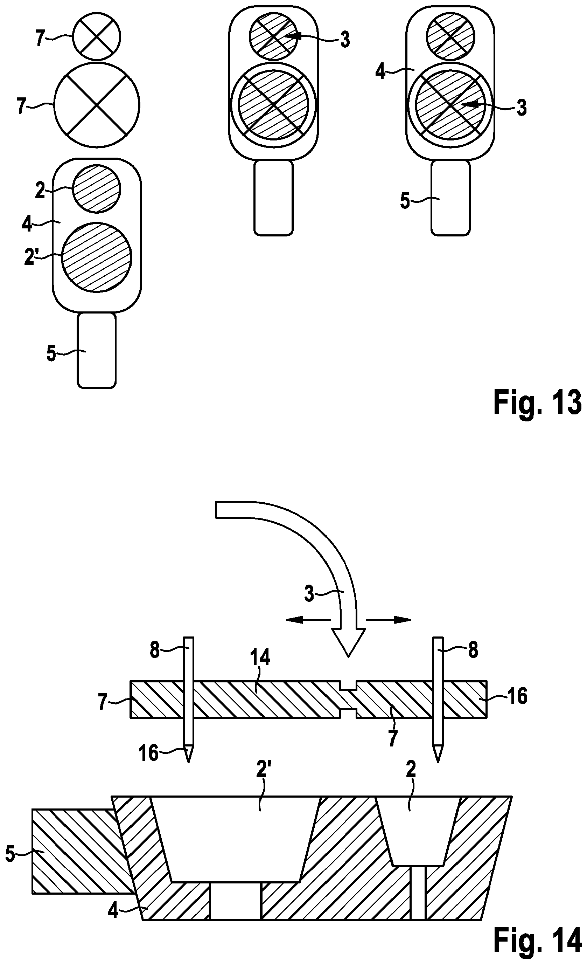

Die Figur 13 zeigt eine schematische Darstellung des Einschubs 4 und der bewegbaren Wasserabgabeeinheit 3, wobei drei verschiedene Zustände der Reihe nach von links nach rechts dargestellt sind. Ganz links wird gezeigt, dass der Einschub 4, welcher einen Griff 5 und zwei Kapselaufnahmen 2, 2' aufweist, noch ausserhalb der Brüheinheit bzw. noch nicht mit einer Injektor 7 eines Brühkopfes 14 (siehe Figur 6) ausgerichtet ist. In diesem Zustand kann der Einschub 4 von einem Benutzer mit frischen Kapseln bestückt werden.

Im zweiten, in der Mitte dargestellten Zustand ist der Einschub 4 bereits in den Aufnahmekopf eingeführt, sodass die beiden Kapselaufnahmen 2, 2' direkt unterhalb der beiden Injektoren 7 positioniert sind. Die Wasserabgabeeinheit 3 ist dabei auf die in der Darstellung kleinere Kapselaufnahme 2 ausgerichtet und steht entsprechende mit diesem Injektor 7 in Wirkverbindung, so dass Wasser von der Wasserabgabeeinheit 3 durch den Injektor 7 in die entsprechende Kapsel eingespritzt werden kann.

Im dritten Zustand rechts ist wiederum der Einschub 4 im Aufnahmekopf angeordnet und die Kapselaufnahmen 2, 2' sind mit den Injektoren 7 ausgerichtet. Die Wasserabgabeeinheit 3 ist dabei über der grösser dargestellten Kapselaufnahme 2' positioniert und steht mit dem entsprechenden Injektor 7 in Wirkverbindung. Die in dieser Kapselaufnahme 2' positionierte Kapsel kann mit Wasser beschickt werden.

Deutlich zu Erkennen ist bei dieser Darstellung das Verfahren, welches zum Zubereiten eines Getränks die folgenden Schritte umfasst:
- Einlegen einer ersten und einer zweiten Kapsel in die erste bzw. zweite Kapselaufnahme 2, 2' eines Einschubs 4,
- Einführen der beiden Kapselaufnahmen 2, 2' mit ihrem Einschub 4 in den Aufnahmekopf der Brüheinheit,
- Ausrichten der ersten Kapselaufnahme 2 mit der Wasserabgabeeinheit 3,
- Verbinden der Wasserabgabeeinheit 3 mit der ersten Kapselaufnahme 2,
- Durchleiten von Wasser durch die erste Kapsel,
- Ausrichten der zweiten Kapselaufnahme 2' mit der Wasserabgabeeinheit 3,
- Verbinden der Wasserabgabeeinheit 3 mit der zweiten Kapselaufnahme 2',
- Durchleiten von Wasser durch die zweite Kapsel.

Nachdem das Getränk aus beiden Kapseln zubereitet wurde, kann der Einschub 4 wieder aus dem Ausnahmekopf entfernt werden und die beiden Kapselaufnahmen 2, 2' können geleert und falls nötig wieder mit frischen Kapseln versehen werden.

In der Figur 14 ist eine schematische Darstellung eines Einschubs 4 und einer bewegbaren Wasserabgabeeinheit 3 im Querschnitt dargestellt. Der Einschub 4 verfügt wiederum über einen Griff 5 und zwei Kapselaufnahmen 2, 2'. Beiden Kapselaufnahme 2, 2' ist ein Injektor 7 mit einer Aufstechspitze 16 zugeordnet, welcher in die Kapselaufnahmen 2, 2' eingesetzte Kapseln (nicht dargestellt) aufstechen und zum Einspritzen von Wasser dienen. Jeder Injektor 7 weist einen Wasseranschluss 8 auf, welcher mit einer Wasserabgabeeinheit 3 verbunden werden kann. Die Wasserabgabeeinheit 3 ist dabei bewegbar ausgestaltet, sodass diese jeweils mit dem einen oder dem anderen Wasseranschluss 8 verbunden werden kann. Alternativ könnte auch der Einschub 4 mit den Kapselaufnahmen 2, 2', den Injektoren 7 und den Wasseranschlüssen 8 bewegbar sein.

In den Figuren 13 und 14 ist jeweils die Wasserabgabeeinheit 3 bewegbar ausgestaltet, während in den vorherigen Ausführungsformen der Brüheinheit jeweils die Kapselaufnahmen 2, 2' bewegbar ausgestaltet sind.

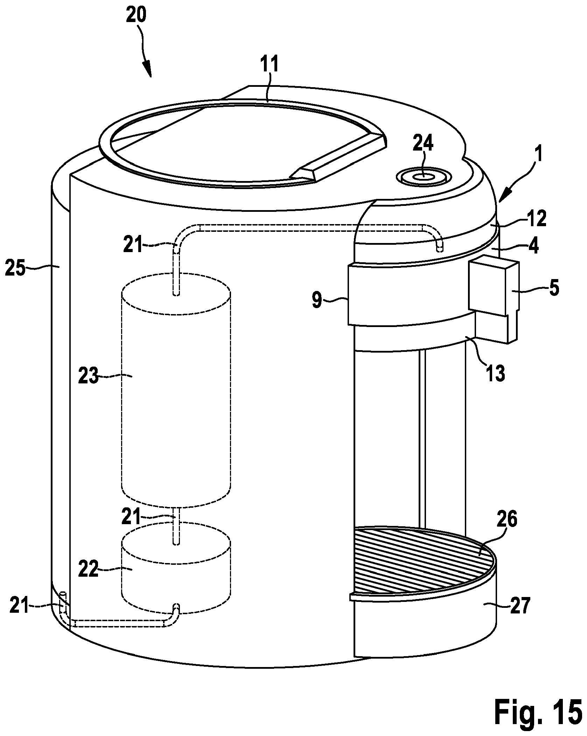

Die Figur 15 zeigt eine erfindungsgemässe Vorrichtung 20 zum Zubereiten eines Getränks in einer perspektivischen Ansicht. Diese Vorrichtung 20 weist eine Brüheinheit 1 wie vorgängig zu den Figuren 1 bis 4 beschrieben auf. Diese Brüheinheit 1 weist entsprechend wiederum einen Einschub 4 mit einem Griff 5 auf, sowie einen Aufnahmekopf 10 (siehe Figuren 1 bis 4), von welchem jedoch nur die obere und untere Einschubhalterung 12, 13 zu erkennen ist. Auf der Rückseite weist die Vorrichtung 20 einen Wassertank 25 auf, welcher über eine Wasserleitung 21 mit einer Pumpe 22, einem Wassererhitzer 23 und der Brüheinheit 1 verbunden ist. Dabei mündet die Wasserleitung 21 in der Brüheinheit 1 in der Wasserabgabeeinheit 3 (nicht dargestellt), mit welcher die eine oder andere Kapselaufnahme 2, 2' (siehe Figuren 1 bis 4) des Einschubs 4 ausgerichtet werden kann. Auf der Oberseite der Vorrichtung 20 ist der Verschlusshebel 11 dargestellt, welcher wie bereits zu den Figuren 1 bis 4 beschrieben, der Verriegelung der Brüheinheit 1 dient. Zusätzlich ist auf der oberen Seite der Vorrichtung 20 eine Kontrolltaste 24 dargestellt, welche die Bedienung und Steuerung der Vorrichtung 20 ermöglicht. Um eine Tasse zum Aufnehmen des zubereiteten Getränkes aufzunehmen, ist unter der Brüheinheit 1 ein Raum vorgesehen, in dem die Tasse abgestellt werden kann. Als Unterlage hierfür dient ein Abtropfgitter 26, welches über einer Abtropfschale 27 positioniert ist. In dieser Abtropfschale 27 wird beispielsweise Spülwasser, Leckageflüssigkeit oder ein Nachtropfen der Vorrichtung 20 aufgefangen.

Wie bereits vorgängig beschrieben, wird der Einschub 4 mit zwei Kapsel bestückt und in den Aufnahmekopf zwischen den beiden Einschubhalterungen 12 und 13 eingeführt. Anschliessend kann der Griff 5 des Einschubs 4 beispielsweise nach links in die Anschlagposition 9 verschoben werden, sodass sich der Einschub 4 um seine Drehachse 6 (siehe Figur 1) dreht. Zum Einführen des Einschubs 4 sowie der evtl. benötigten Drehung des Einschubs 4 wird der Verschlusshebel 11 gelöst und angehoben. Durch die Drehung des Griffs 5 zur Anschlagposition 9 wird eine erste der beiden Kapselaufnahmen 2, 2' (siehe Figuren 1 bis 4) unter der Wasserabgabeeinheit 3 (ebenfalls Figuren 1 bis 4) angeordnet, sodass Wasser aus dem Wassertank 25 durch die Wasserleitung 21, die Pumpe 22, den Wassererhitzer 23 in die Kapsel eingespritzt werden kann. Das zubereitete Getränk tritt aus der Brüheinheit 1 aus und kann in eine Tasse ausgegeben werden. In einem weiteren Schritt kann der Verschlusshebel 11 erneut angehoben werden, der Griff 5 des Einschubs 4 nach rechts bzw. in die zweite Anschlagposition verschoben und somit der Einschub 4 gedreht werden, sodass die zweite der beiden Kapselaufnahmen 2, 2' (siehe Figuren 1 bis 4) unter der Wasserabgabeeinheit 3 (siehe Figur 1 und 3) angeordnet wird. Der Verschlusshebel 11 wird wiederum nach unten gedrückt und somit die Brüheinheit 1 verschlossen und eine weitere Bewegung des Einschubs 4 blockiert. Anschliessend erfolgt die Zubereitung des Getränks mit der zweiten Kapsel durch Zuführen von Wasser aus dem Wassertank 25 über die Wasserleitung 21, die Pumpe 22, den Wassererhitzer 23 in die Kapsel.

Nachdem das Getränk aus beiden Kapseln zubereitet wurde, wird wiederum der Verschlusshebel 11 angehoben, sodass der Einschub 4 entfernt, entleert und gegebenenfalls neu mit Kapseln bestückt werden kann.

## Patentansprüche

1. Brüheinheit (1) zur sequentiellen Zubereitung eines Getränkes aus wenigstens zwei Kapseln, umfassend wenigstens eine erste und eine zweite Kapselaufnahme (2, 2') und eine Wasserzuführung mit einer einzigen Wasserabgabeeinheit (3) zum Zuführen von Wasser zu je einer Kapselaufnahme, wobei die Kapselaufnahmen und die Wasserabgabeeinheit (3) derart relativ zueinander bewegbar sind, dass die Wasserabgabeeinheit (2) in einer ersten Position mit der ersten Kapselaufnahme (2') und in einer zweiten Position mit der zweiten Kapselaufnahme (3) in Wirkverbindung bringbar ist oder in Wirkverbindung steht, wobei wenigstens zwei Kapselaufnahmen (2, 2') zur Aufnahme von mechanisch unterschiedlichen und unterschiedlich grossen Kapseln ausgestaltet sind, wobei
- entweder jeder Kapselaufnahme (2, 2') ein eigener Injektor (7) zum Aufstechen und Einspritzen von Wasser in eine in der Kapselaufnahme angeordenten Kapsel zugeordnet ist, wobei jeder Injektor einen Wasseranschluss (8) zum Anschliessen an die Wasserabgabeeinheit (3) aufweist,
- oder die Wasserabgabeeinheit (3) selbst einen Injektor zum Aufstechen der Kapsel aufweist, wobei die Wasserabgabeeinheit mit ihrem Injektor über eine Bewegungsvorrichtung verfügt, welche das Aufstechen und Eindringen des Injektors in die Kapsel erlaubt,
- und wobei der Injektor (7) in einem Brühkopf (14) angeordnet ist, wobei der Brühkopf über Dichtungen verfügt, welche ein dichtes Abschliessen der Kapselaufnahmen (2, 2') erlauben.

2. Brüheinheit (1) nach Anspruch 1, **dadurch gekennzeichnet, dass** die Kapselaufnahmen (2) von der ersten Position in die zweite Position verschiebbar oder schwenkbar oder drehbar in der Brüheinheit (1) gelagert sind.

3. Brüheinheit (1) nach Anspruch 2, **dadurch gekennzeichnet, dass** die Kapselaufnahmen (2) um eine horizontale oder vertikale Drehachse (6) von der ersten Position in die zweite Position schwenkbar oder drehbar sind.

4. Brüheinheit (1) nach Anspruch 1, **dadurch gekennzeichnet, dass** die Kapselaufnahmen (2) von der ersten Position aus der Brüheinheit (1) entfernbar und in die zweite Position in der Brüheinheit (1) einsetzbar sind.

5. Brüheinheit (1) nach einem der Ansprüche 1 bis 4, **dadurch gekennzeichnet, dass** die wenigstens zwei Kapselaufnahmen (2) gemeinsam in einem Einschub (4) angeordnet sind.

6. Brüheinheit nach einem der Ansprüche 1 bis 5, **dadurch gekennzeichnet, dass** wenigstens eine Kapselaufnahme zur Aufnahme einer Kapsel, welche insbesondere Milch oder Milchpulver enthält, ausgestaltet ist, bei welcher der Auslauf des zubereiteten Getränks direkt von der Kapsel gebildet wird, so dass das zubereitete Getränk nicht mit der Brüheinheit oder mit der Kapselaufnahme in Berührung kommt.

7. Vorrichtung (20) zum Zubereiten eines Getränks aus wenigstens zwei unterschiedlichen Kapseln, umfassend eine Brüheinheit (1) nach einem der Ansprüche 1 bis 6, eine Wasserleitung (21) und eine Wasserpumpe (22), wobei die Wasserabgabeeinheit (3) der Brüheinheit (1) über die Wasserleitung (21) mit der Wasserpumpe (22) verbindbar oder verbunden ist.

8. Vorrichtung (20) nach Anspruch 7 weiter umfassend einen Wassererhitzer (23).

9. Vorrichtung (20) nach Anspruch 8, **dadurch gekennzeichnet, dass** der Wassererhitzer (23) in Fliessrichtung des Wassers nach der Wasserpumpe (22) angeordnet ist.

10. Verfahren zum Zubereiten eines Getränks mit wenigstens einer ersten und einer zweiten Kapsel mit einer Vorrichtung (20) nach einem der Ansprüche 7 bis 9, umfassend die Schritte :
- Einlegen einer ersten Kapsel in die erste Kapselaufnahme (2) und einer mechanisch unterschiedlichen und unterschiedlich grossen zweiten Kapsel in die zweite Kapselaufnahme (2) der Vorrichtung (20),
- Ausrichten der ersten Kapselaufnahme (2) mit der Wasserabgabeeinheit (3),
- Verbinden der Wasserabgabeeinheit (3) mit der ersten Kapselaufnahme (2),
- Durchleiten von Wasser durch die erste Kapsel,
- Ausrichten der zweiten Kapselaufnahme (2) mit der Wasserabgabeeinheit (3),
- Verbinden der Wasserabgabeeinheit (3) mit der zweiten Kapselaufnahme (2'),
- Durchleiten von Wasser durch die zweite Kapsel.

11. Verfahren nach Anspruch 10, **dadurch gekennzeichnet, dass** das Ausrichten der Kapselaufnahme (2) mit der Wasserabgabeeinheit (3) mittels einer Verschiebung oder einer Schwenkbewegung oder einer Drehbewegung der Kapselaufnahme (2) erfolgt.

12. Verfahren nach Anspruch 10, **dadurch gekennzeichnet, dass** das Ausrichten der Kapselaufnahme (2) mit der Wasserabgabeeinheit (3) mittels Entfernen der Kapselaufnahme (2) aus der Vorrichtung (20), Drehen der Kapselaufnahme (2) und Wiedereinsetzen der Kapselaufnahme (2) in die Vorrichtung (20) erfolgt.

## Claims

1. Brewing unit (1) for the sequential preparation of a beverage from at least two capsules, comprising at least a first and a second capsule receptacle (2, 2') and a water supply with a single water delivery unit (3) for supplying water to each capsule receptacle, wherein the capsule receptacles and the water delivery unit (3) can be moved relative to one another in such a way that the water delivery unit (3) can be brought into or is in operative connection with the first capsule receptacle (2') in a first position and with the second capsule receptacle (2) in a second position, wherein at least two capsule receptacles (2, 2') are designed to receive mechanically different capsules of different sizes, wherein
- either each capsule receptacle (2, 2') is assigned its own injector (7) for lancing and injecting water into a capsule arranged in the capsule receptacle, each injector having a water connection (8) for connection to the water delivery unit (3),
- or the water delivery unit (3) itself has an injector for piercing the capsule, the water delivery unit with its injector having a movement device which allows the piercing and penetration of the injector into the capsule,
- and wherein the injector (7) is arranged in a brewing head (14), the brewing head having seals which permit a tight closure of the capsule receptacles (2, 2').

2. Brewing unit (1) according to claim 1, **characterised in that** the capsule receptacles (2) are mounted in the brewing unit (1) so as to be displaceable or pivotable or rotatable from the first position into the second position.

3. Brewing unit (1) according to claim 2, **characterised in that** the capsule receptacles (2) are pivotable or rotatable about a horizontal or vertical axis of rotation (6) from the first position to the second position.

4. Brewing unit (1) according to claim 1, **characterised in that** the capsule receptacles (2) are removable from the first position in the brewing unit (1) and insertable into the second position in the brewing unit (1).

5. Brewing unit (1) according to one of claims 1 to 4, **characterised in that** the at least two capsule receptacles (2) are arranged together in one insert (4).

6. Brewing unit according to one of claims 1 to 5, **characterised in that** at least one capsule receptacle is designed to receive a capsule which contains in particular milk or milk powder, in which the outlet of the prepared beverage is formed directly by the capsule, so that the prepared beverage does not come into contact with the brewing unit or with the capsule receptacle.

7. A device (20) for preparing a beverage from at least two different capsules, comprising a brewing unit (1) according to any one of claims 1 to 6, a water line (21) and a water pump (22), wherein the water delivery unit (3) of the brewing unit (1) is connectable or connected to the water pump (22) via the water line (21).

8. The apparatus (20) of claim 7 further comprising a water heater (23).

9. Device (20) according to claim 8, **characterised in that** the water heater (23) is arranged downstream of the water pump (22) in the direction of flow of the water.

10. A method of preparing a beverage comprising at least a first and a second capsule with an apparatus (20) according to any one of claims 7 to 9, comprising the steps of:
- Inserting a first capsule into the first capsule receptacle (2) and a mechanically different and differently sized second capsule into the second capsule receptacle (2) of the device (20),
- Align the first capsule holder (2) with the water delivery unit (3),
- Connecting the water delivery unit (3) to the first capsule receptacle (2),
- Passing water through the first capsule,
- Align the second capsule holder (2) with the water delivery unit (3),
- Connecting the water delivery unit (3) to the second capsule receptacle (2'),
- Passing water through the second capsule.

11. Method according to claim 10, **characterised in that** the alignment of the capsule receptacle (2) with the water delivery unit (3) is effected by means of a displacement or a pivoting movement or a rotary movement of the capsule receptacle (2).

12. The method according to claim 10, **characterized in that** the alignment of the capsule receptacle (2) with the water dispensing unit (3) is performed by removing the capsule receptacle (2) from the device (20), rotating the capsule receptacle (2) and reinserting the capsule receptacle (2) into the device (20).

## Revendications

1. Unité d'infusion (1) pour la préparation séquentielle d'une boisson à partir d'au moins deux capsules, comprenant au moins un premier et un deuxième logement de capsule (2, 2') et une amenée d'eau avec une seule unité de distribution d'eau (3) pour amener de l'eau à chaque logement de capsule, les logements de capsule et l'unité de distribution d'eau (3) étant mobiles l'un par rapport à l'autre de telle manière, que l'unité de distribution d'eau (2) peut être amenée en liaison active dans une première position avec le premier logement de capsule (2') et dans une deuxième position avec le deuxième logement de capsule (3) ou est en liaison active avec celui-ci, au moins deux logements de capsule (2, 2') étant conçus pour recevoir des capsules mécaniquement différentes et de tailles différentes, où
- soit à chaque logement de capsule (2, 2') est associé un injecteur (7) propre pour piquer et injecter de l'eau dans une capsule disposée dans le logement de capsule, chaque injecteur présentant un raccord d'eau (8) pour le raccordement à l'unité de distribution d'eau (3),
- ou l'unité de distribution d'eau (3) elle-même comporte un injecteur pour percer la capsule, l'unité de distribution d'eau disposant avec son injecteur d'un dispositif de déplacement qui permet le percement et la pénétration de l'injecteur dans la capsule,
- et l'injecteur (7) étant disposé dans une tête d'infusion (14), la tête d'infusion disposant de joints d'étanchéité qui permettent une fermeture étanche des logements de capsule (2, 2').

2. Unité d'infusion (1) selon la revendication 1, **caractérisée en ce que** les logements de capsule (2) sont montés dans l'unité d'infusion (1) de manière à pouvoir être déplacés ou pivotés de la première position à la deuxième position ou à pouvoir tourner.

3. Unité d'infusion (1) selon la revendication 2, **caractérisée en ce que** les logements de capsule (2) peuvent pivoter ou tourner autour d'un axe de rotation horizontal ou vertical (6) de la première position à la deuxième position.

4. Unité d'infusion (1) selon la revendication 1, **caractérisée en ce que** les logements de capsule (2) peuvent être retirés de l'unité d'infusion (1) à partir de la première position et peuvent être insérés dans l'unité d'infusion (1) dans la deuxième position.

5. Unité d'infusion (1) selon l'une des revendications 1 à 4, **caractérisée en ce que** les au moins deux logements de capsule (2) sont disposés ensemble dans un tiroir (4).

6. Unité d'infusion selon l'une des revendications 1 à 5, **caractérisée en ce qu'**au moins un logement de capsule est conçu pour recevoir une capsule, qui contient en particulier du lait ou du lait en poudre, dans laquelle l'écoulement de la boisson préparée est formé directement par la capsule, de sorte que la boisson préparée n'entre pas en contact avec l'unité d'infusion ou avec le logement de capsule.

7. Dispositif (20) pour préparer une boisson à partir d'au moins deux capsules différentes, comprenant une unité d'infusion (1) selon l'une des revendications 1 à 6, une conduite d'eau (21) et une pompe à eau (22), l'unité de distribution d'eau (3) de l'unité d'infusion (1) pouvant être reliée ou étant reliée à la pompe à eau (22) par la conduite d'eau (21).

8. Dispositif (20) selon la revendication 7, comprenant en outre un chauffe-eau (23).

9. Dispositif (20) selon la revendication 8, **caractérisé en ce que** le chauffe-eau (23) est disposé en aval de la pompe à eau (22) dans le sens d'écoulement de l'eau.

10. Procédé de préparation d'une boisson comprenant au moins une première et une deuxième capsule avec un dispositif (20) selon l'une quelconque des revendications 7 à 9, comprenant les étapes de :
- L'insertion d'une première capsule dans le premier logement de capsule (2) et d'une deuxième capsule mécaniquement différente et de taille différente dans le deuxième logement de capsule (2) du dispositif (20),
- Aligner le premier logement de capsule (2) avec l'unité de distribution d'eau (3),
- Relier l'unité de distribution d'eau (3) au premier réceptacle de capsule (2),
- Faire passer l'eau à travers la première capsule,
- Aligner le deuxième logement de capsule (2) avec l'unité de distribution d'eau (3),
- Relier l'unité de distribution d'eau (3) au deuxième logement de capsule (2'),
- Faire passer l'eau par la deuxième capsule.

11. Procédé selon la revendication 10, **caractérisé en ce que** l'alignement du logement de capsule (2) avec l'unité de distribution d'eau (3) est réalisé au moyen d'un déplacement ou d'un mouvement de pivotement ou d'un mouvement de rotation du logement de capsule (2).

12. Procédé selon la revendication 10, **caractérisé en ce que** l'alignement du logement de capsule (2) avec l'unité de distribution d'eau (3) est réalisé en retirant le logement de capsule (2) du dispositif (20), en faisant tourner le logement de capsule (2) et en remettant le logement de capsule (2) dans le dispositif (20).
